# EUROPEAN PATENT APPLICATION

(11) **EP 2 398 186 A1**
(43) Date of publication of application: **21.12.2011**
(21) Application number: 10748334.9
(22) Date of filing: 03.03.2010
(51) Int. Cl.: H04L 12/24

(54) **METHOD, DEVICE AND SYSTEM FOR DYNAMIC UPGRADE OF A SERVICE**

(30) Priority: 04.03.2009 CN 200910078876
(71) Applicant: Huawei Technologies Co., Ltd., Shenzhen, Guangdong 518129 (CN)
(72) Inventor: SHI, Kailin, Shenzhen Guangdong 518129 (CN); XU, Xiaohua, Shenzhen Guangdong 518129 (CN)
(74) Representative: Körber, Martin Hans
(86) International application number: PCT/CN2010/070842
(87) International publication number: WO 2010/099744

(57) **Abstract**

A method, a device, and a system for upgrading services dynamically are disclosed in the embodiments of the present invention. The method includes: updating, in a uniform call connecting device of a distributed service platform, call interface information of a second service system to call interface information of a first service system, and routing a new call request to the first service system; and deactivating the second service system, and uninstalling the second service system when detecting that calls corresponding to the second service system are completed. The device includes: an updating module, configured to deploy the call interface information of an activated first service system in the uniform call connecting device of the distributed service platform; and a monitor processing module, configured to: deactivate the second service system, and uninstall the second service system when detecting that calls corresponding to the second service system are completed. Therefore, in the embodiments of the present invention, in the process of upgrading the service system, no call interruption occurs, so that the quality of service is ensured.

## Description

This application claims priority to Chinese Patent Application No. 200910078876.7, filed with the Chinese Patent Office on March 04, 2009 and entitled "Method, Device and System for Upgrading Services Dynamically", which is hereby incorporated by reference in its entirety.

### FIELD OF THE INVENTION

The present invention relates to wireless communication technologies, and in particular, to a method, a device, and a system for upgrading services dynamically.

### BACKGROUND OF THE INVENTION

As services in the communication field are more and more diversified, it is indispensible for the operator to upgrade a service system in a service platform. The upgrade cost, upgrade period, and upgrade risk of the service system are different according to different service platforms.

The technical solutions to upgrading the service system in the prior art mainly include the following three kinds: The first service upgrade solution is: Shut down a service platform; then, replace the old service system with a new service system in the service platform; finally, restart the service platform to finish upgrading the service system. The second service upgrade solution is: Terminate and uninstall the old service on the service platform; and install a new service onto the service platform and activate the new service to finish upgrading the service system. The third service upgrade solution is implemented in a dual-computer cluster mode. In a dual-computer cluster mode, the service system concurrently exists in an active service platform and a standby service platform. When upgrading the service system, the service system is switched from the active service platform to the standby service platform through a platform call access point; then, a new service system is installed and activated on the active service platform; and finally, the service system is switched from the standby service platform back to the active service platform through the platform call access point, thus finishing an upgrade of the service system.

In the process of developing the present invention, the inventor finds at least these problems in the prior art: In the upgrading process of a new service, the service upgrade solutions described in the preceding cause the calls in the old service to be interrupted, and the users who are using the old service are unable to continue using the service. In this way, the quality of service is reduced.

### SUMMARY OF THE INVENTION

The embodiments of the present invention provide a method, a device, and a system for upgrading a service dynamically to hold on the calls in the old service in the upgrade process and improve the quality of service.

A method for upgrading a service dynamically provided in an embodiment of the present invention includes:
updating, in a uniform call connecting device of a distributed service platform, call interface information of a second service system to call interface information of a first service system, and routing a new call request to the first service system; and
deactivating the second service system, and uninstalling the second service system when detecting that calls corresponding to the second service system are completed.

A device for upgrading a service dynamically provided in an embodiment of the present invention includes:
an updating module, configured to: update, in a uniform call connecting device of a distributed service platform, call interface information of a second service system to call interface information of a first service system, and route a new call request to the first service system; and
a monitor processing module, configured to: deactivate the second service system, and uninstall the second service system when detecting that calls corresponding to the second service system are completed.

A system for upgrading a service dynamically provided in an embodiment of the present invention includes a service management device and a uniform call connecting device,
the service management device, configured to: update, in the uniform call connecting device, call interface information of a second service system to call interface information of a first service system, and route a new call request to the first service system; deactivate the second service system, and uninstall the second service system when detecting that calls corresponding to the second service system are completed; and
the uniform call connecting device, configured to receive a call request according to the call interface information.

In the embodiments of the present invention, on the distributed service platform, the service system is distributed on different service nodes, and the sessions corresponding to each call are independent of each other. Therefore, when the second service system is upgraded to the first service system, the connecting of the calls in the first service system does not affect the calls held in the second service system. The second service system is uninstalled when detecting that calls in the second service system are completed, so that the calls in the second service system are not interrupted by the upgrade operation. Therefore, the service upgrade is brought no negative effect, and the quality of service is improved.

### BRIEF DESCRIPTION OF THE DRAWINGS

FIG. 1 is a flowchart of a method for upgrading a service dynamically according to a first embodiment of the present invention;
FIG. 2 is a flowchart of a method for upgrading a service dynamically according to a second embodiment of the present invention;
FIG. 3 is a flowchart of installing and setting a first service system in a method for upgrading a service dynamically according to the second embodiment of the present invention;
FIG. 4 is a schematic structural diagram of an NGIN service platform applied in a method for upgrading a service dynamically according to a third embodiment of the present invention;
FIG. 5 is a signaling flowchart of installing a first service system in a method for upgrading a service dynamically according to the third embodiment of the present invention;
FIG. 6 is a schematic structural diagram of a device for upgrading a service dynamically according to the first embodiment of the present invention;
FIG. 7 is a schematic structural diagram of a device for upgrading a service dynamically according to the second embodiment of the present invention; and
FIG. 8 is a schematic structural diagram of a system for upgrading a service dynamically according to the first embodiment of the present invention.

### DETAILED DESCRIPTION OF THE EMBODIMENTS

The technical solutions in embodiments of the present invention are described in further detail in the following with reference to accompanying drawings and specific embodiments.

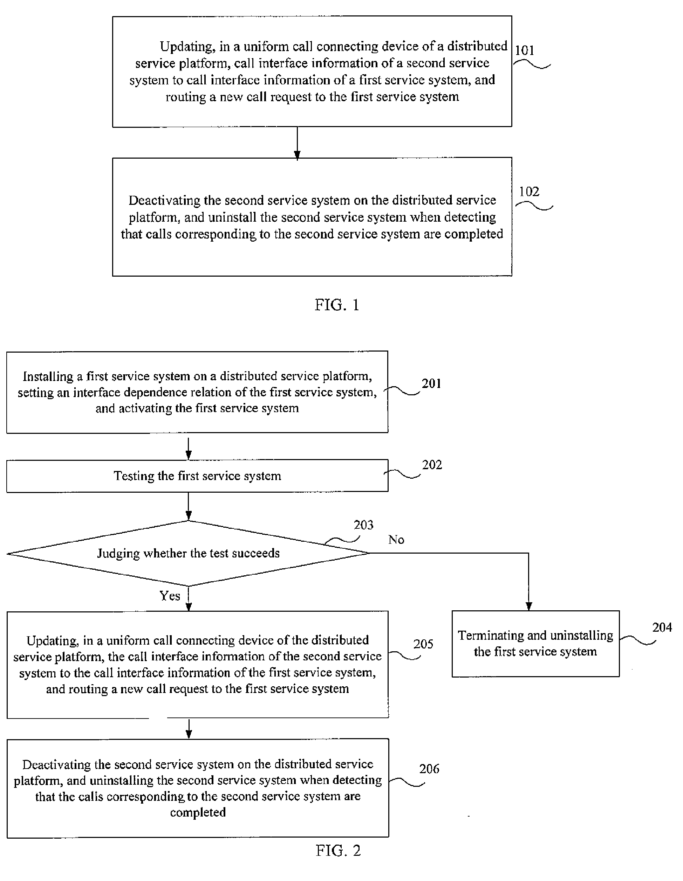

FIG. 1 is a flowchart of a method for upgrading a service dynamically according to a first embodiment of the present invention. As shown in FIG. 1, the method in this embodiment includes:
Step 101: Updating, in a uniform call connecting device of a distributed service platform, call interface information of a second service system to call interface information of a first service system, and route a new call request to the first service system;

On a distributed service platform, a service is an entirety to the outside, but internally, it is reflected as several service modules distributed on different service nodes in the distributed service platform. The service modules are dependent on each other. That is, a call service can be implemented by invoking these service modules according to the dependence relation. Moreover, each call is processed through a separate session between each service module. The sessions are independent of each other.

In this embodiment, when the service system of an old version on the distributed service platform needs to be upgraded to a service system of a new version, namely, when the second service system needs to be upgraded to the first service system, a service management device in the distributed service platform may update the call interface information of the second service system to be upgraded in the uniform call connecting device to the call interface information of the first service system. The call interface information provides an access for initiating a call from a client to the distributed service platform. When a new call request is connected to the uniform call connecting device, the uniform call connecting device connects the new call request to an activated first service system according to the call interface information of the first service system. Therefore, the newly initiated calls all use the first service system and are not connected to the second service system.

Step 102: Deactivating the second service system, and uninstalling the second service system when detecting that calls corresponding to the second service system are completed;

The service management device deactivates the second service system. The deactivation operation is to set a to-be-uninstalled identifier for the second service system, so that the service management device on the distributed service platform knows that the second service system needs to be monitored according to the to-be-uninstalled identifier. However, because the second service system is not uninstalled at this time, the calls already connected to the second service system are held and cannot be interrupted. On the distributed service platform, the sessions corresponding to the calls of the first service system and the calls of the second service system are independent of each other. Therefore, the calls held in the second service system generate no interference to the new calls connected to the first service system. At this time, both the new calls connected to the first service system and the calls already connected to the second service system may exist in the distributed service platform.

In order to complete an upgrade task thoroughly, the service management device may further monitor the statuses of the calls already connected to the second service system. When the service management device detects that the statuses of the calls are "completed", the second service system may be uninstalled so that the first service system replaces the second service system thoroughly. Because the uninstalling operation is performed when all calls of the second service system are completed, no interruption of the calls of the second service system occurs; meanwhile, because the first service system has been connected, no incapability of connecting the new calls occurs. Therefore, the continuity of a call service is ensured, and the quality of service is improved.

In this embodiment, in the process that on the distributed service platform, the second service system is upgraded to the first service system, the call interface information of the second service system to be upgraded is updated to the call interface information of the activated first service system. Therefore, the newly initiated calls may be connected to the first service system and may use the upgraded service system. Because the sessions corresponding to each call in the distributed service platform are independent of each other, the newly initiated calls connected in the first service system do not interfere with the calls held in the second service system. The second service system is uninstalled when detecting that the calls in the second service system are completed. Therefore, when the newly initiated calls are connected to the first service system, the calls held in the second service system are not interrupted. Therefore, in the process of upgrading the service system in this embodiment, no call interruption occurs. In this way, the quality of service is ensured.

FIG. 2 is a flowchart of a method for upgrading a service dynamically according to a second embodiment of the present invention. As shown in FIG. 2, the method in this embodiment includes:
Step 201: Installing a first service system on a distributed service platform, setting an interface dependence relation of the first service system, and activating the first service system;
   For example, a service management device may install service modules of the first service system onto corresponding service nodes respectively, and then set the interface dependence relation of these service modules. The interface dependence relation is a logical relation of invoking the service modules at the time of processing a call. Finally, a deployed first service system is activated so that the first service system enters a startup state.
Step 202: Testing the first service system;
   The service management device may test the first service system before updating call interface information of a second service system to call interface information of the first service system.
Step 203: Judging whether the test succeeds;
   If the test succeeds, perform step 205; if the test fails, perform step 204.
Step 204: Terminating and uninstalling the first service system;
   If the test fails, the service management device may terminate the first service system, and then uninstall the first service system deployed on the corresponding service nodes of the distributed service platform, thus canceling the service upgrade.
Step 205: Updating, in a uniform call connecting device of the distributed service platform, the call interface information of the second service system to the call interface information of the first service system, and routing a new call request to the first service system.
   In the uniform call connecting device of the distributed service platform, the call interface information of the second service system is updated to the call interface information of the first service system. Therefore, the first service system that is successfully tested is put into use, and the newly initiated calls can use the upgraded service system, namely, the first service system. Because the sessions corresponding to each call in the distributed service platform are independent of each other, the newly initiated calls connected in the first service system do not interfere with the calls held in the second service system.
Step 206: Deactivating the second service system on the distributed service platform, and uninstalling the second service system when detecting that the calls corresponding to the second service system are completed.
Because the uninstalling operation is performed when all calls of the second service system are completed, no interruption of the calls of the second service system occurs; meanwhile, the first service system has been connected, no incapability of connecting the new calls occurs. Therefore, the continuity of a call service is ensured, and the quality of service is improved.

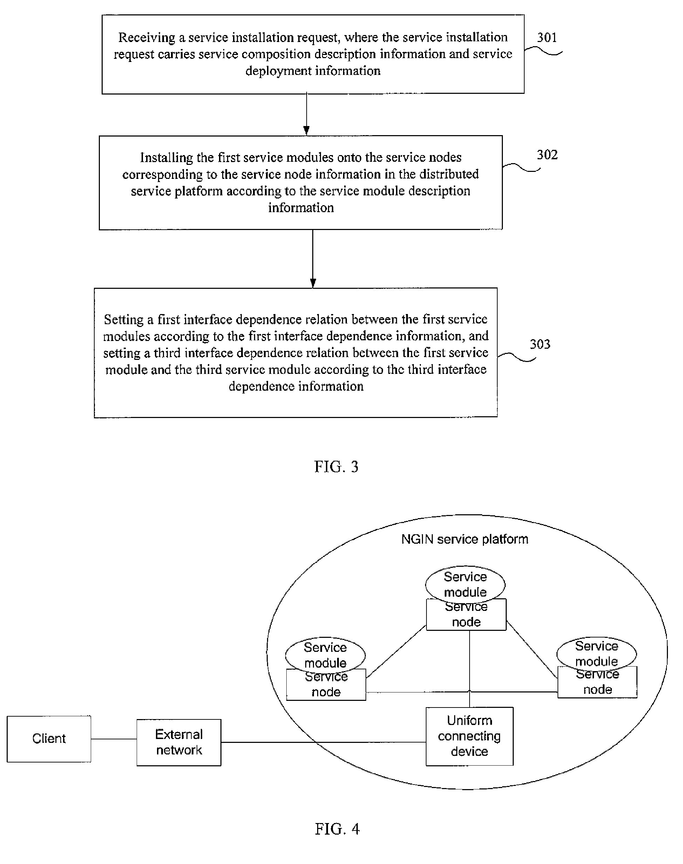

FIG. 3 is a flowchart of installing and setting a first service system in a method for upgrading a service dynamically according to the second embodiment of the present invention. As shown in FIG. 3, the process of installing and setting the first service system is a method of implementing step 201 in the preceding. The method may include:
Step 301: Receiving a service installation request, where the service installation request carries service composition description information and service deployment information. The service composition description information includes: service module description information used to describe first service modules which are included in the first service system, first interface dependence information between the first service modules, and third interface dependence information between the first service modules and third service modules which are included in a third service system. The service deployment information includes information about service nodes for installing the first service modules.

Specifically, a service management device may parse the received service installation request. The service installation request carries service composition description information and service deployment information for installing the first service system. The service composition description information includes service module description information, first interface dependence information, and third interface dependence information.

The service module description information is used to describe several first service modules which are included in the first service system. The several first service modules are in a one-to-one relation with several service nodes on the distributed service platform.

The first interface dependence information is used to describe a logical relation of mutual invocation between the first service modules.

The third interface dependence information is used to describe a logical relation of mutual invocation between the several first service modules which are included in the first service system and the third service modules which are included in the third service system. The third service system may be any service system deployed on the distributed service platform. The first service modules which are included in the first service system may interact with the third service modules which are included in the third service system. Therefore, the third interface dependence information may describe the logical relation of mutual invocation between the first service modules and the third service modules.

The service node information in the service deployment information is used to describe the service nodes corresponding to the several first service modules. The several first service modules may be installed on these service nodes respectively.

Step 302: Installing the first service modules onto the service nodes corresponding to the service node information in the distributed service platform according to the service module description information.

Because the several first service modules which are included in the first service system are in a one-to-one relation with the several service nodes on the distributed service platform, the service management device may install the several first service modules onto the several service nodes respectively, thus finishing installing the first service system.

Step 303: Setting a first interface dependence relation between the first service modules according to the first interface dependence information, and setting a third interface dependence relation between the first service module and the third service module according to the third interface dependence information.

After the first service modules are installed on the service nodes, the service management device may: set the first interface dependence relation between the first service modules according to the first interface dependence information obtained from the service composition description information, thus deploying the logical relation of mutual invocation between the first service modules which are included in the first service system; and set the third interface dependence relation between the first service modules and the third service modules, thus deploying a logical relation of the first service module invoking the third service module when an invocation relation exists between the first service system and the third service system. In the specific deployment process, the interface dependence relation of the upgraded first service system may be implemented by updating the interface dependence relation of the second service system to be upgraded.

In this embodiment, in the process that on the distributed service platform, the second service system is upgraded to the first service system, call interface information of the second service system is updated to call interface information of the activated first service system. Therefore, newly initiated calls can be connected to the first service system through a uniform call connecting device with deployed call interface information. Because the sessions corresponding to each call in the distributed service platform are independent of each other, the newly initiated calls connected in the first service system do not interfere with the calls held in the second service system. The second service system is uninstalled when detecting that the calls in the second service system are completed. In this way, when the newly initiated calls are connected to the first service system, the calls held in the second service system are not interrupted. Therefore, in this embodiment, in the process of upgrading the service system, no call interruption occurs, so that the quality of service is ensured. Moreover, in this embodiment, before the call interface information of the first service system is deployed into the uniform call connecting device, offline test may be performed for the first service system. If the test fails, the first service system may be deactivated and uninstalled forcibly, thus ensuring the quality of service of the upgraded first service system and reducing the cost of upgrading the service.

A method for upgrading a service dynamically in a third embodiment uses a Next Generation Intelligent Network (hereinafter referred to as NGIN) service platform as a distributed service platform in order to describe the technical solution in the method for upgrading a service dynamically of the present invention in detail.

FIG. 4 is a schematic structural diagram of an NGIN service platform applied in a method for upgrading a service dynamically according to the third embodiment of the present invention. As shown in FIG. 4, a call request sent by a client is transmitted to a uniform call connecting device on the NGIN service platform through an external network (for example, Public Switched Telephone Network). The uniform call connecting device forwards a call to different service systems on the NGIN service platform according to different call request. On the NGIN service platform, service systems correspond to different service nodes distributed inside the NGIN service platform. That is, the service systems on the NGIN service platform are demonstrated as an entirety to the outside, but in the NGIN service platform, the service systems on the NGIN service platform include service modules distributed on different nodes. To each service system deployed on the NGIN service platform, an interface dependence relation of mutual invocation exists between these service modules. The service modules may invoke each other according to the interface dependence relation when processing a call. Meanwhile, each call is processed by an independent session in each service module, and the sessions are independent of each other. After the call is connected to the NGIN service platform and a complete call session is created, the call is a series of interaction streams between service modules, and between the sessions inside each service module.

In this embodiment, it is assumed that a second service system on the NGIN service platform needs to be upgraded to a first service system. The first service system includes two first service modules. The two first service modules need to be installed on the first service node and the second service node on the NGIN service platform. The two first service modules are in an invocation relation with a third service module in a third service system on the NGIN service platform.

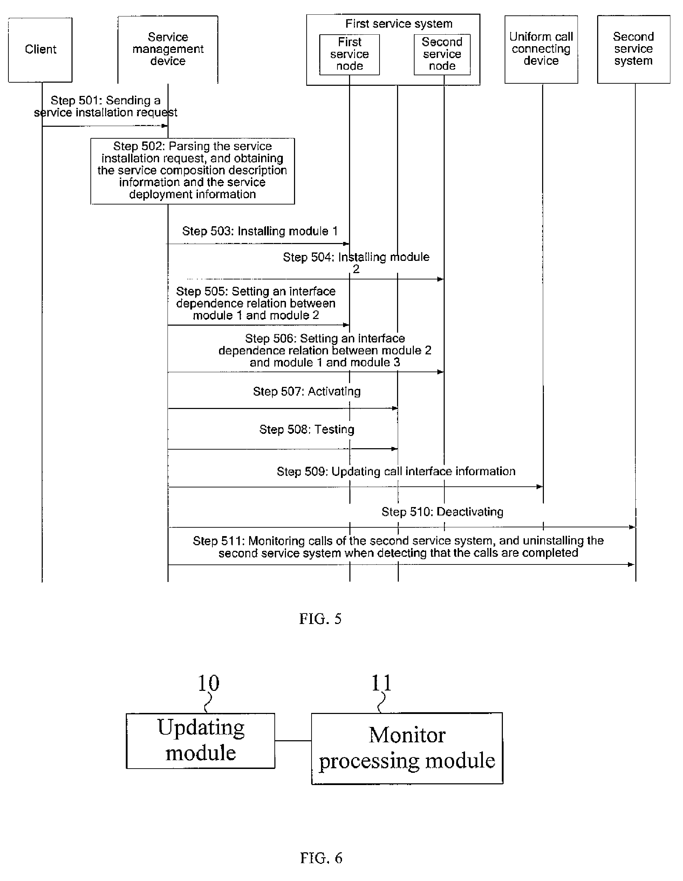

FIG. 5 is a signaling flowchart of installing a first service system in a method for upgrading a service dynamically according to the third embodiment of the present invention. As shown in FIG. 5, the method for installing the first service system in this embodiment may include:
Step 501: A client sends a service installation request to a service management device.
   The service installation request carries all description information required for installing the first service system, namely, service composition description information and service deployment information.
Step 502: The service management device parses the service installation request, and obtains the service composition description information and the service deployment information.

The service composition description information includes description information for two first service modules which are included in the first service system, first interface dependence information used to describe a logical relation of mutual invocation between the two first service modules, and third interface dependence information used to describe a logical relation of mutual invocation between the two first service modules and a third service module of a third service system.

The following description information is an example of the service composition description information:

```
         <components>
        <component id="module1" version="V001R001C01B002" packageFileName="
        module1.tar" cidFileName=" module1.cid" startupOrder="1"/>
        <component id="module2" version="V001R001C01B002" packageFileName="
        module2.tar" cidFileName=" module2.cid" startuporder="2"/>
         </components>
         <relationship>
         <connection type="use">
         <from componentID="module1" version="V001R001C01 B00 1 "/>
        <to componentID="module2" version="V001R001C01B002"
        interfaceName="CreateCallSession"/>
         </connection>
         <connection type="Use">
         <from componentID="module1" version="V001R001C01B001"/>
        <to componentID="module2" version="V001R001C01B002"
        interfaceName="ReleaseCallSession"/>
         </connection>
```

Service node information in the service deployment information is used to describe a first service node and a second service node that correspond to the two first service modules respectively. The two first service modules may be installed on the corresponding service nodes respectively.

The following description information is an example of the service deployment information:

```
         <moduleInstance instanceName="PPS" nodeIP="10.71.96.53" containerID="1">
         <comp onentList>
              <component id="module1" version = "V001R001C01B001"
         globalSingleton="false" index="3">
                  <instance instanceName="module1_1"nodeIP="10.71.96.53"
 containerID="1"/>
              <component>
              <component id="module2" version = "V001R001C01B001"
        globalSingleton="false" index="2">
                                  <instance instanceName="module2_1"
        nodeIP="10.71.96.53" containerID="1 "/>
              </component>
                   </componentList>
        </moduleInstance>
```

Step 503: The service management device installs a first service module "module 1" onto the corresponding first service node.

Step 504: The service management device installs the other first service module "module 2" onto the corresponding second service node.

Step 503 and step 504 may fulfill an objective of installing the first service system onto an NGIN service platform.

Step 505: The service management device sets an interface dependence relation between module 1 on the first service node and module 2 on the second service node according to the first interface dependence information, and sets an interface dependence relation between module 1 on the first service node and module 3 in the third service system according to the third interface dependence relation.

Step 506: The service management device sets an interface dependence relation between module 2 on the second service node and module 1 on the first service node according to the first interface dependence information, and sets an interface dependence relation between module 2 on the second service node and module 3 in the third service system according to the third interface dependence relation.

Step 505 and step 506 may set the first interface dependence relation between module 1 on the first service node and module 2 on the second service node, and set the third interface dependence relation between module 2 on the second service node and module 3.

Step 507: The first service system is activated.

The activation may be performed to start the first service system.

Step 508: The service management device tests the first service system.

If the test fails, the service management device deactivates and uninstalls the first service system. More specifically, the service management device deactivates and uninstalls module 1 on the first service node and module 2 on the second service node, thus canceling the service upgrade. If the test succeeds, step 509 is performed.

Step 509: The service management device deploys call interface information of the first service system into a uniform call connecting device.

At this time, newly initiated calls may be connected to the first service system through the uniform call connecting device.

Step 510: The service management device deactivates a second service system.

Step 510 may ensure that the newly initiated calls are not connected to the second service system any more, but are connected to the first service system through the uniform call connecting device. At this time, both the new calls connected to the first service system and the calls connected to the second service system before deactivation may exist in the distributed service platform.

Step 511: The service management device monitors calls corresponding to the second service system, and uninstalls the second service system when detecting that the calls are completed.

Because the uninstalling operation is performed when all calls of the second service system are completed, no interruption of the calls of the second service system occurs; meanwhile, because the first service system has been connected, no incapability of connecting the new calls occurs. Therefore, the continuity of a call service is ensured, and the quality of service is improved.

In this embodiment, the NGIN service platform is taken as an example to describe the process of upgrading the second service system to the first service system. The call interface information of the activated first service system is deployed into the uniform call connecting device, so that the newly initiated calls may be connected to the first service system through the uniform call connecting device with the deployed call interface information. Because the sessions corresponding to the calls in the distributed service platform are independent of each other, the newly initiated calls connected in the first service system do not interfere with the calls held in the second service system. The second service system is uninstalled only after completion of the calls in the second service system is detected. Therefore, when the newly initiated calls are connected to the first service system, the calls held in the second service system are not interrupted. Therefore, in this embodiment, in the process of upgrading the service system, no call interruption occurs, so that the quality of service is ensured. Moreover, in this embodiment, before the call interface information of the first service system is deployed into the uniform call connecting device, offline test may be performed for the first service system. If the test fails, the first service system may be deactivated and uninstalled forcibly, thus ensuring the quality of service of the upgraded first service system and reducing the cost of upgrading the service.

FIG. 6 is a schematic structural diagram of a device for upgrading a service dynamically according to the first embodiment of the present invention. As shown in FIG. 6, the device in this embodiment includes an updating module 10 and a monitor processing module 11, where:
the updating module 10 is configured to: update, in a uniform call connecting device of a distributed service platform, call interface information of a second service system to call interface information of a first service system, and route a new call request to the first service system; and
the monitor processing module 11 is configured to: deactivate the second service system, and uninstall the second service system when detecting that calls corresponding to the second service system are completed.

More specifically, when the service system of an old version on the distributed service platform needs to be upgraded to a service system of a new version, namely, when the second service system needs to be upgraded to the first service system, the updating module 10 may update the call interface information of the second service system to the call interface information of an activated first service system. The call interface information provides an access for initiating a call from a client to the distributed service platform. Under this circumstance, when a newly initiated call is connected to the uniform call connecting device, the uniform call connecting device may connect the newly initiated call to the activated first service system according to the call interface information of the first service system. In this way, all newly initiated calls can use the first service system.

After the updating module 10 deploys the first service system onto the distributed service platform, the monitor processing module 11 may deactivate the second service system. The deactivation is to set a to-be-uninstalled identifier for the second service system, so that a service management device on the distributed service platform knows that the second service system with the to-be-uninstalled identifier needs to be monitored. However, because the second service system is not uninstalled, the calls already connected to the second service system are held and are not interrupted. On the distributed service platform, the sessions corresponding to the calls of the first service system and the calls of the second service system are independent of each other. Therefore, the calls held in the second service system generate no interference to the new calls connected to the first service system. At this time, both the new calls connected to the first service system and the calls connected to the second service system before deactivation may exist in the distributed service platform.

In order to complete an upgrade task thoroughly, the monitor processing module 11 may further monitor the statuses of the calls connected to the second service system before deactivation. When the monitor processing module 11 detects that the statuses of the calls are "completed", the second service system may be uninstalled so that the first service system replaces the second service system thoroughly. Because the uninstalling operation is performed when all calls of the second service system are completed, no interruption of the calls of the second service system occurs; meanwhile, the first service system has been connected, no incapability of connecting the new calls occurs. Therefore, the continuity of a call service is ensured, and the quality of service is improved.

In this embodiment, in the process that on the distributed service platform, the second service system is upgraded to the first service system, the updating module updates the call interface information of the second service system to be upgraded to the call interface information of the activated first service system. Therefore, newly initiated calls can be connected to the first service system through the uniform call connecting device with the deployed call interface information, so that the newly initiated calls may use the upgraded service system. Because the sessions corresponding to the calls in the distributed service platform are independent of each other, the newly initiated calls connected in the first service system do not interfere with the calls held in the second service system. The second service system is uninstalled when the monitor processing module detects that the calls in the second service system are completed. In this way, when the newly initiated calls are connected to the first service system, the calls held in the second service system are not interrupted. Therefore, in this embodiment, in the process of upgrading the service system, no call interruption occurs, so that the quality of service is ensured.

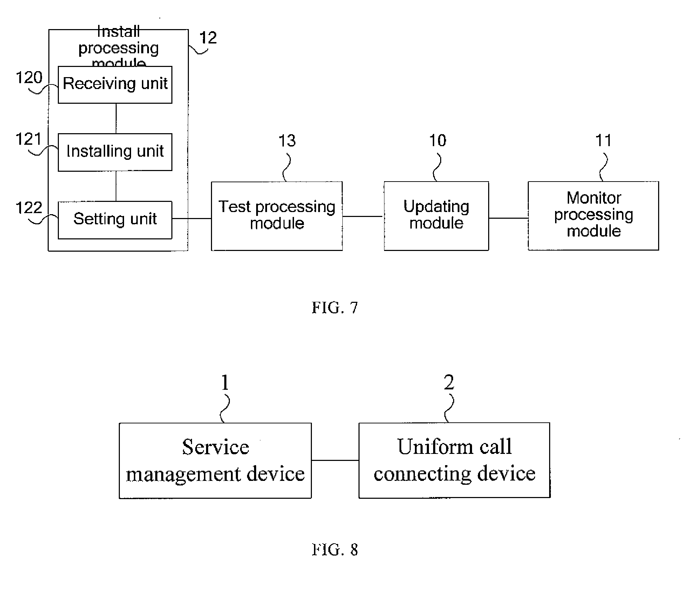

FIG. 7 is a schematic structural diagram of a device for upgrading a service dynamically according to the second embodiment of the present invention. As shown in FIG. 7, the device in this embodiment includes an updating module 10 and a monitor processing module 11, where:
the updating module 10 is configured to: update, in a uniform call connecting device of a distributed service platform, call interface information of a second service system to call interface information of a first service system, and route a new call request to the first service system; and
the monitor processing module 11 is configured to: deactivate the second service system, and uninstall the second service system when detecting that calls corresponding to the second service system are completed.

Furthermore, the device may further include an install processing module 12 and a test processing module 13, where:
the install processing module 12 is configured to: install the first service system on the distributed service platform, set an interface dependence relation of the first service system, and activate the first service system; and
the test processing module 13 is configured to test the first service system.

The install processing module 12 may include a receiving unit 120, an installing unit 121, and a setting unit 122, where:
the receiving unit 120 is configured to receive a service installation request, where the service installation request carries service composition description information and service deployment information. The service composition description information includes service module description information used to describe first service modules which are included in the first service system, first interface dependence information between the first service modules, and third interface dependence information between the first service module and third service module which is included in a third service system. The service deployment information includes information about service nodes for installing the first service modules;
the installing unit 121 is configured to install the first service modules onto the service nodes corresponding to the service node information in the distributed service platform according to the service module description information; and
the setting unit 122 is configured to: set a first interface dependence relation between the first service modules according to the first interface dependence information, and set a third interface dependence relation between the first service modules and the third service modules according to the third interface dependence information.

In this embodiment, in the process that on the distributed service platform, the second service system is upgraded to the first service system, the updating module updates the call interface information of the second service system to the call interface information of an activated first service system. Therefore, newly initiated calls can be connected to the first service system through the uniform call connecting device with the deployed call interface information. Because the sessions corresponding to the calls in the distributed service platform are independent of each other, the newly initiated calls connected in the first service system do not interfere with the calls held in the second service system. The second service system is uninstalled when the monitor processing module detects that the calls in the second service system are completed. Therefore, when the newly initiated calls are connected to the first service system, the calls held in the second service system are not interrupted. Therefore, in this embodiment, through the device that upgrades the service system, no call interruption occurs, so that the quality of service is ensured. Moreover, in this embodiment, before the call interface information of the first service system is deployed into the uniform call connecting device by the device in this embodiment, the test processing module may further perform offline test for the first service system. If the test fails, the first service system may be deactivated and uninstalled forcibly, thus ensuring the quality of service of the upgraded first service system and reducing the cost of upgrading a service.

FIG. 8 is a schematic structural diagram of a system for upgrading a service dynamically according to the first embodiment of the present invention. As shown in FIG. 8, the system in this embodiment includes a service management device 1 and a uniform call connecting device 2, where:
the service management device 1 is configured to: update, in the uniform call connecting device, call interface information of a second service system to call interface information of a first service system, and route a new call request to the first service system; deactivate the second service system, and uninstall the second service system when detecting that calls corresponding to the second service system are completed; and
the uniform call connecting device 2 is configured to receive a call request according to the call interface information.

In this embodiment, in the process that on the distributed service platform, the second service system is upgraded to the first service system, the service management device updates the call interface information of the second service system to the call interface information of the first service system. Therefore, newly initiated calls connected by the uniform call connecting device can be connected to the first service system according to the call interface information, and the newly initiated calls may use the upgraded service system. Because the sessions corresponding to the calls in the distributed service platform are independent of each other, the newly initiated calls connected in the first service system do not interfere with the calls held in the second service system. The second service system is uninstalled when the service management device detects that the calls in the second service system are completed. Therefore, when the newly initiated calls are connected to the first service system, the calls held in the second service system are not interrupted. Therefore, in this embodiment, in the process of upgrading the service system, no call interruption occurs, so that the quality of service is ensured.

A system for upgrading services dynamically in the second embodiment is based on the system for upgrading services dynamically in the first embodiment. Furthermore, the service management device is further configured to install a first service system, set an interface dependence relation of the first service system, activate the first service system, and test the first service system.

On the basis of the implementing effects of the first embodiment, the service management device of the system for upgrading services dynamically in this embodiment may install and activate the first service system, and perform offline test for the first service system after activation. Effective means of test are provided, and the quality of service of the upgraded first service system is ensured, so that the cost of upgrading the service is reduced.

Persons of ordinary skilled in the art should understand that all or part of the procedures of the method under the present invention may be implemented by a program instructing relevant hardware. The program may be stored in a computer readable storage medium. When the program runs, the procedures of the method specified in the preceding embodiments are performed. The storage medium may be a magnetic disk, a Compact Disk Read-Only Memory (CD-ROM), a Read-Only Memory (ROM) or a Random Access Memory (RAM).

Finally, it should be noted that the preceding embodiments are merely used for describing the technical solutions of the present invention, but not intended to limit the present invention. Although the present invention is described in detail with reference to exemplary embodiments, it should be understood that persons of ordinary skilled in the art may still make modifications or equivalent replacements to the technical solutions of the present invention, however, these modifications or equivalent replacements shall not make the modified technical solutions depart from the spirit and scope of the technical solutions of the present invention.

## Claims

1. A method for upgrading services dynamically, comprising:
updating, in a uniform call connecting device of a distributed service platform, call interface information of a second service system to call interface information of a first service system, and routing a new call request to the first service system; and
deactivating the second service system, and uninstalling the second service system when detecting that calls corresponding to the second service system are completed.

2. The method for upgrading services dynamically according to claim 1, wherein:
before updating, in the uniform call connecting device of the distributed service platform, the call interface information of the second service system to the call interface information of the first service system, the method further comprises: testing the first service system.

3. The method for upgrading services dynamically according to claim 1 or 2, wherein:
before updating, in the uniform call connecting device of the distributed service platform, the call interface information of the second service system to the call interface information of the first service system, the method further comprises: installing the first service system on the distributed service platform, setting an interface dependence relation of the first service system, and activating the first service system.

4. The method for upgrading services dynamically according to claim 3, wherein:
the installing of the first service system on the distributed service platform and setting of the interface dependence relation of the first service system comprises:
receiving a service installation request, wherein the service installation request carries service composition description information and service deployment information; the service composition description information comprises service module description information used to describe first service modules which are included in the first service system, first interface dependence information between the first service modules, and third interface dependence information between the first service module and third service module which is included in a third service system; and the service deployment information comprises information about service nodes for installing the first service modules;
installing the first service modules onto service nodes corresponding to the service node information in the distributed service platform according to the service module description information; and
setting a first interface dependence relation between the first service modules according to the first interface dependence information, and setting a third interface dependence relation between the first service module and the third service module according to the third interface dependence information.

5. A device for upgrading services dynamically, comprising:
an updating module, configured to: update, in a uniform call connecting device of a distributed service platform, call interface information of a second service system to call interface information of a first service system, and route a new call request to the first service system; and
a monitor processing module, configured to: deactivate the second service system, and uninstall the second service system when detecting that calls corresponding to the second service system are completed.

6. The device for upgrading services dynamically according to claim 5, further comprising:
a test processing module, configured to test the first service system.

7. The device for upgrading services dynamically according to claim 5 or 6, further comprising:
an install processing module, configured to: install the first service system on the distributed service platform, set an interface dependence relation of the first service system, and activate the first service system.

8. The device for upgrading services dynamically according to claim 7, wherein the install processing module comprises:
a receiving unit, configured to receive a service installation request, wherein the service installation request carries service composition description information and service deployment information, and the service composition description information comprises service module description information used to describe first service modules which are included in the first service system, first interface dependence information between the first service modules, and third interface dependence information between the first service modules and third service modules which are included in a third service system, and the service deployment information comprises information about service nodes for installing the first service modules;
an installing unit, configured to install the first service modules onto service nodes corresponding to the service node information in the distributed service platform according to the service module description information; and
a setting unit, configured to: set a first interface dependence relation between the first service modules according to the first interface dependence information, and set a third interface dependence relation between the first service module and the third service module according to the third interface dependence information.

9. A system for upgrading services dynamically comprises a service management device and a uniform call connecting device, wherein:
the service management device is configured to: update, in the uniform call connecting device, call interface information of a second service system to call interface information of a first service system, and route a new call request to the first service system; deactivate the second service system, and uninstall the second service system when detecting that calls corresponding to the second service system are completed; and
the uniform call connecting device is configured to receive a call request according to the call interface information.

10. The system for upgrading services dynamically according to claim 9, wherein:
the service management device is further configured to: install the first service system, set an interface dependence relation of the first service system, activate the first service system, and test the first service system.
